# EUROPÄISCHE PATENTSCHRIFT

(11) **EP 1 972 401 B1**
(45) Veröffentlichungstag und Bekanntmachung des Hinweises auf die Patenterteilung: **25.05.2016**
(21) Anmeldenummer: 08002145.4
(22) Anmeldetag: 06.02.2008
(51) Int. Cl.: B23D 35/00

(54) **Vorrichtung zum Schneiden von Bändern, Blechen oder dergleichen und Verfahren zur Bestimmung und/oder Kalibrierung des Schneidspaltes bei einer solchen Vorrichtung**
Device for cutting webs, metal sheets or similar and method for determining and/or calibrating the cutting clearance of such a device
Dispositif de coupe de bandes, de tôles ou analogues et procédé de détermination et/ou de calibrage de l'intervalle de coupe dans un tel dispositif

(30) Priorität: 21.03.2007 DE 102007013455
(43) Veröffentlichungstag der Anmeldung: 24.09.2008
(73) Patentinhaber: BWG BERGWERK- UND WALZWERK-MASCHINENBAU GMBH, D-47051 Duisburg (DE)
(72) Erfinder: Auth, Jurgen Karl, 47249 Duisburg (DE); Baukloh, Dieter, 47053 Duisburg (DE); Noé, Andreas, 47647 Kerken (DE)
(74) Vertreter: von dem Borne, Andreas

(56) Entgegenhaltungen:
- EP-A- 1 245 354
- EP-A- 1 319 480
- WO-A-01/85408
- DE-A1- 10 205 994
- JP-A- 1 188 217
- JP-A- 2001 054 813
- US-A- 4 506 577

## Beschreibung

Die Erfindung betrifft eine Vorrichtung gemäß dem Oberbegriff des Anspruchs 1 zum Schneiden bzw. Trennen von Bändern, Blechen oder dergleichen, insbesondere Metallbändern, -blechen oder dergleichen sowie ein Verfahren zur Bestimmung bzw. Kalibrierung des Schneidspaltes in einer Schneidvorrichtung. - Schneiden bzw. Trennen von Bändern oder Blechen meint insbesondere Besäumen (der Längskanten) von Metallbändern oder Blechen. Eine solche Schneidvorrichtung ist folglich als Besäumschere mit zumindest zwei rotierenden Kreismessern ausgebildet. Üblicherweise weist eine Besäumvorrichtung beidseitig des jeweiligen Bandes jeweils zumindest einen Besäumkopf bzw. eine Besäumschere auf. Denn Metallbänder oder Metallbleche werden regelmäßig randseitig beschnitten und folglich besäumt, um eine definierte konstante Band- bzw. Blechbreite zu erzielen und mögliche Band- bzw. Blechkantenbeschädigungen zu entfernen. Das Besäumen von Metallbändern erfolgt häufig in Bandbehandlungslinien im Durchlauf mit beidseitig des Bandes angeordneten Besäumköpfen. Die Besäumköpfe bzw. Besäumscheren weisen Kreismesserpaare auf und sind in Bandbreitenrichtung zur Bandbreiteneinstellung verfahrbar. Der Schneidspalt der Kreismesserpaare und die Messerüberdeckung von erstem Messer und zweitem Messer bzw. Obermesser und Untermesser der Besäumköpfe können zur Minimierung des Schnittgrates und zur Verlängerung der Messerstandzeiten eingestellt werden. Dabei besteht das Bedürfnis, einen möglichst kleinen Schneidgrat an der Bandkante zu erzeugen. Der Schneidgrat wird maßgeblich durch den Schneidspalt bestimmt. Schneidspalt meint im Rahmen der Erfindung den Abstand zwischen den Messern in der Bandebene und folglich üblicherweise den horizontalen Schneidspalt bzw. den Schneidspalt in axialer Richtung. Der Einfluss der vertikalen Überdeckung auf die Qualität bzw. die Größe des Schneidgrates hat nur einen begrenzten Einfluss. Der exakten Einstellung des Schneidspaltes bzw. der Bestimmung des Schneidspaltes kommen im Zuge der Herstellung bzw. Bearbeitung von Bändern folglich besondere Bedeutung zu. Die Erfindung umfasst jedoch nicht nur Besäumscheren sondern auch andere Schneidvorrichtungen, z. B. Querteilscheren.

Aus der Praxis ist es grundsätzlich bekannt, den Schneidspalt durch Messung zu bestimmen. Bei der insoweit bekannten Ausführungsform ist ein Messer horizontal fest angeordnet, während das andere horizontal einstellbar ist. Die Position des einstellbaren Messers wird zum Beispiel mittels Encodern gemessen. Zum Kalibrieren werden die Messer soweit zusammen gefahren, dass sich die Messer gerade berühren. Der Positionswert des Encoders wird abgespeichert und als Null-Position für den Schneidspalt definiert. Dann wird das eine Messer auf den gewünschten Schneidspalt verfahren. Nachteilig bei der bekannten Vorgehensweise ist, dass die Kalibrierung des Schneidspaltes zum Teil manuell durchgeführt wird und die Beurteilung, wann sich die Messer gerade berühren, einer gewissen Subjektivität unterworfen ist. Außerdem dauert der Kalibriervorgang verhältnismäßig lange. Im Übrigen wird nicht direkt im Schneidspalt gemessen, sondern konstruktiv bedingt in gewisser Entfernung davon. Dieses ist insbesondere dann problematisch, wenn die Maschine zu Produktionsbeginn eine geringe Temperatur aufweist und sich während der Produktion erwärmt. Denn die gesamte Maschine ist thermischen Dehnungen unterworfen, was wiederum Einfluss auf die Bestimmung des Schneidspaltes hat. In der Praxis ist es deshalb erforderlich, während der Erwärmung der Maschine mehrfach neu zu kalibrieren. Erfolgt dieses nicht, so haben die erzeugten Bänder eine stark unterschiedliche Bandkantenqualität.

Aus der DE 102 05 994 A1 kennt man eine Einrichtung zum Längsteilen einer durchlaufenden Materialbahn mit wenigstens einem Messbalken, an dem mehrere Messerhalter verschiebbar und feststellbar angeordnet sind. Dabei sollen mit einem bestimmten Schnittprogramm Materialstreifen verschiedener Breite herstellbar sein. Soll dabei ein Schnittprogramm geändert werden, dann müssten die einzelnen Messerhalter in ihren Abständen zueinander auf dem Messerbalken neu positioniert werden. Dazu ist eine Positioniereinrichtung vorgesehen, die in Längsrichtung des Messerbalkens bewegbar geführt ist. Diese Positioniereinrichtung ist mit einem ansteuerbaren Fahrantrieb verbunden, sodass die Positioniereinrichtung am Messerbalken in vorgebbarer Position verfahren werden kann. Den Positioniereinrichtungen sind jeweils Sensoren zugeordnet, die von einem zugeordneten Maßstab der jeweiligen Position der Positioniereinrichtung gegenüber einem Ausgangspunkt an die zentrale Steuereinrichtung zurückmeldet.

Ferner kennt man eine Schneidvorrichtung, bei welcher der Schneidspalt zwischen den Messern einstellbar ist, wobei die Obermesser und die Untermesser jeweils auf Schlitten an Führungen bzw. an Gewindestangen verfahrbar sind (vgl. US 4 506 577). Eine ähnliche Vorrichtung ist aus der EP 1 245 354 A1 bekannt, wobei dort Messer vorhanden sind, die jeweils mit Trägern an Führungen verfahrbar sind. Im Bereich der Träger sind Sensoren zur Positionsbestimmung vorgesehen.

Aus der JP 2001 054813 (Patent Abstracts of Japan) ist eine Schneidvorrichtung bekannt, bei welcher der Schneidspalt überwacht wird. Dazu sind Sensoren vorgesehen.

Die WO 01/85408 A2 beschreibt eine Einrichtung in Einklang mit dem Oberbegriff des Anspruchs 1 zum Längsteilen einer Materialbahn mit mehreren Messern, wobei die Untermesser mit einer Verschiebeeinrichtung positioniert werden. Die Verschiebeeinrichtung weist einen Sensor auf, der beispielsweise als Laserstrahl-Sender-Empfänger ausgebildet sein kann, und dessen Strahl senkrecht zur Untermesserwelle ausgerichtet ist, wobei ein Reflex von der Umfangsfläche des Untermessers bzw. das Ausbleiben eines solchen Reflexes vom Sensor als Signal erfasst wird. Die hieraus resultierenden Signale werden an einen Rechner in Verbindung mit dem durch den Positionsgeber an den Rechner abgegebenen Abstandsignal weitergeleitet.

Der Erfindung liegt die Aufgabe zugrunde, eine Vorrichtung zum Schneiden, bzw. Trennen von Bändern, Blechen oder dergleichen zu schaffen, welche eine einwandfreie Ermittlung bzw. Kalibrierung des Schneidspaltes ermöglicht. Außerdem soll ein Verfahren zur Bestimmung des Schneidspaltes mit einer derartigen Vorrichtung angegeben werden.

Zur Lösung dieser Aufgabe lehrt die Erfindung eine Vorrichtung gemäß dem Anspruch 1, wobei die Positionsmessvorrichtung durch die Messausnehmungen hindurch gegen die Messfläche arbeitet. - Dabei ist der Schneidspalt durch Positionierung des ersten Messers und/oder des zweiten Messers einstellbar. Vorzugsweise ist die Schneidvorrichtung als Besäumschere mit zumindest zwei rotierenden Kreismessern ausgebildet. Die Erfindung umfasst jedoch auch Schneidvorrichtungen, die als Querteilscheren zum Querteil bzw. Spalten von Bändern ausgebildet sind und dazu zwei "guillotinenartig" schneidende gerade Messer aufweisen.

Dabei geht die Erfindung von der Erkenntnis aus, dass eine besonders exakte Ermittlung und damit auch Kalibrierung des Schneidspaltes erfolgen kann, wenn die Position nicht nur eines, sondern beider Messer gemessen bzw. messtechnisch erfasst wird und anschließend der Schneidspalt durch Differenzbildung berechnet wird. Die Positionsmessvorrichtungen können dabei als berührend messende Vorrichtungen, zum Beispiel Messstifte bzw. -taster und/oder als berührungslos messende Vorrichtungen, zum Beispiel Laser, ausgebildet sein. Diese arbeiten, direkt auf eine Messfläche, so dass die Position der beiden Messer direkt gemessen wird. Eine solche Messfläche wird dabei entweder von der Stirnfläche eines Messers selbst oder auch von einer der Stirnfläche zugeordneten Anlagefläche eines Messerhalters gebildet. Im Zuge der Messung mit zum Beispiel einem Messtaster wird der Messtaster folglich direkt gegen die betreffende Messfläche angestellt und aus den den beiden Messern zugeordneten Messwerten kann dann durch Differenzbildung exakt der Schneidspalt bestimmt werden. Auf diese Weise wird eine automatische, objektive Kalibrierung in kürzester Zeit möglich. Denn in Abhängigkeit von dem ermittelten Schneidspalt kann selbstverständlich eine Änderung des Schneidspaltes auf den gewünschten Wert erfolgen. Dieses kann im Wege eines Steuer- oder Regelprozesses erfolgen. Die Kalibrierung gelingt innerhalb weniger Sekunden. Aus diesem Grunde kann auch während der Erwärmungsphase der Maschine ohne Weiteres mehrfach nachkalibriert werden.

In bevorzugter Ausführungsform sind das erste Messer und das zweite Messer in an sich bekannter Weise an jeweils einem Messerhalter gehalten, die rotierend angetrieben werden. Jedem der Messer ist eine separate Messvorrichtung, zum Beispiel ein eigener Messtaster, zugeordnet, der "ortsfest" zum Beispiel an einem Maschinengestell gehalten ist und folglich nicht mit dem Messer bzw. dem Messerhalter rotiert. Vorzugsweise sind die beiden Messtaster auf derselben Seite der Messer, zum Beispiel auf der Antriebsseite der Schneidvorrichtung angeordnet. Es ist vorgesehen, dass der Messerhalter und/oder das Messer zumindest eine Messausnehmung aufweist, welche auf die jeweilige Messfläche, das heißt entweder auf die Stirnfläche des Messers selbst oder auf eine korrespondierende Anlagefläche des Messerhalters treffen. Im Zuge der Messung lässt sich der Messtaster folglich in die Messausnehmungen einfahren bzw. durch die Messausnehmungen hindurch an die betreffende Messfläche anstellen.

Besonders bevorzugt ist eine Ausführungsform der Erfindung, bei welcher im Bereich eines Messers lediglich im Bereich des Messerhalters eine Durchbrechung vorgesehen ist, welche direkt auf die Stirnfläche des Messers trifft. Bei dem anderen Messer ist es dann zweckmäßig, dass einerseits der Messerhalter eine Messausnehmung und andererseits das Messer eine fluchtende Messaufnehmung aufweisen, so dass diese beiden fluchtenden Messausnehmungen dann auf eine dem Messer zugeordnete Anlagefläche des Messerhalters treffen. Auf diese Weise gelingt es, dass die Messvorrichtungen bzw.

Messtaster aus derselben Richtung, zum Beispiel von der Antriebsseite auf die Kreismesser arbeiten.

Ferner schlägt die Erfindung vor, dass der Messerhalter beidseitig des Messers jeweils zumindest eine Haltebacke aufweist, so dass ein Messer gleichsam austauschbar zwischen zwei Haltebacken fixierbar ist. In diesem Zusammenhang ist es zweckmäßig, wenn zumindest eine der beiden Haltebacken, nämlich die der Messvorrichtung zugewandte Haltebacke zumindest eine die Haltebacke vollständig durchdringende Messausnehmung bzw. Durchbrechung aufweist. Diese die Haltebacke durchdringende Messausnehmung kann beispielsweise direkt auf die Stirnfläche des Messers treffen. Ferner besteht die Möglichkeit, dass diese Durchbrechung der Haltebacke mit einer korrespondierenden Durchbrechung des Messers fluchtet, sodass diese beiden Durchbrechungen dann - in der bereits beschriebenen Weise - auf eine entsprechende Anlagefläche treffen, welche die Messfläche bildet. Stets besteht die Möglichkeit, dass die Messvorrichtung, zum Beispiel der Messtaster durch die Ausnehmungen bzw. Durchbrechungen die jeweils maßgebliche Messfläche kontaktiert und auf diese Weise exakt die Position bestimmt.

Nach einem weiteren Vorschlag der Erfindung ist vorgesehen, dass jedem Messer, zum Beispiel Obermesser und Untermesser jeweils mehrere Messausnehmungen zugeordnet sind, zum Beispiel zwei bis fünf Messausnehmungen. Diese können gleichsam über den Umfang des Messers verteilt sein, so dass nach bevorzugter Ausführungsform eine Positionsmessung in mehreren Winkelstellungen des Messers möglich werden wird, sodass sich ein eventuell vorhandener Planheitsfehler der Messerstirnseiten feststellen und ausmitteln lässt.

Nach bevorzugter Ausführungsform weist die Messvorrichtung einen verfahrbaren Messstift bzw. Messtaster auf, welcher die Messausnehmungen im Zuge der Messung durchdringt und gegen die betreffende Messfläche anliegt. Dazu kann ein solcher Messstift an einem verfahrbaren Schlitten mittels eines Antriebes verfahrbar sein. Ein solcher Antrieb kann beispielsweise als pneumatische Zylinderkolbenanordnung ausgebildet sein. Der Messtaster kann über ein geeignetes Pneumatikventil an- bzw. abgestellt werden. Die Endlagen der Messtaster werden innerhalb der Messvorrichtung zum Beispiel mittels berührungsloser Näherungsschalter überwacht bzw. ausgewertet. Es versteht sich, dass im Rahmen der Erfindung eine geeignete Steuer- und/oder Regeleinrichtung vorgesehen sein kann, welche die Messvorrichtungen positioniert und die ermittelten Positionen auswertet und folglich aus den ermittelten Positionen den Schneidspalt berechnet. Eine solche Steuer- und/oder Regelvorrichtung kann ferner mit den Stelltrieben verbunden sein, welche die Messerposition(en) einstellen. Insgesamt kann der Spalt nicht nur gemessen, sondern auch exakt eingestellt bzw. kalibriert werden.

Ferner ist Gegenstand der Erfindung ein Verfahren zur Bestimmung und/oder Kalibrierung des Schneidspaltes einer Schneidvorrichtung für Bänder, Bleche oder dergleichen, insbesondere im Zuge des Besäumens und/oder Querteilens von Metallbändern oder -blechen. Ein solches Verfahren wird erfindungsgemäß mit einer Vorrichtung der beschriebenen Art durchgeführt, wobei die Schneidvorrichtung ein erstes Messer und ein zweites Messer aufweist, welche (entlang der Bandebene bzw. horizontal) um ein den Schneidspalt bildendes Maß voneinander beabstandet sind. Erfindungsgemäß ist vorgesehen, dass sowohl die Position des ersten Messers als auch die Position des zweiten Messers gemessen und aus diesen Positionen durch Differenzbildung der Schneidspalt bestimmt bzw. berechnet wird. Zur Berechnung kann ein geeigneter Rechner vorgesehen sein, der auch in eine Steuer- und/oder Regeleinrichtung integriert sein kann. Diese kann auch die Positionierung der Messer und damit die Einstellung des Spaltes vornehmen.

Dabei liegt es im Rahmen der Erfindung, dass die Position der Messer berührend, zum Beispiel mittels eines Messstiftes bzw. Messtasters ermittelt werden. Die Erfindung umfasst aber auch Ausführungsformen, bei welchen die Position berührungslos, zum Beispiel mittels eines Lasers, gemessen wird.

Insbesondere im Zusammenhang mit einer Vorrichtung der beschriebenen Art schlägt die Erfindung vor, dass die Messung der Positionen des ersten und/oder zweiten Messers bei ruhenden Messern erfolgt. Denn die Messvorrichtungen sind vorzugsweise "ortsfest" in der Besäumvorrichtung oder Querteilvorrichtung angeordnet, das heißt sie rotieren nicht mit den Messern bzw. Messerhaltern. Da die Messung vorzugsweise in der beschriebenen Weise durch geeignete Ausnehmungen bzw. Durchbrechungen in dem Messerhalter und/oder dem Messer erfolgt, ist es zweckmäßig, die Positionsmessung bei ruhenden Messern durchzuführen, sodass die Messer in geeigneter Weise in eine Position gebracht werden können, in welcher die jeweiligen Messvorrichtungen durch die Ausnehmung(en) hindurch auf die Messflächen arbeiten kann. Dabei ist zweckmäßig, wenn die Messung nicht nur in einem einzigen Bereich des Messers, sondern für unterschiedliche Winkelstellungen des Messers und folglich in unterschiedlichen Winkelbereichen des Messers erfolgt. Auf diese Weise lassen sich eventuell vorhandene Planheitsfehler der Messerstirnflächen feststellen und ausmitteln. Die Messung kann für ein Messer zum Beispiel mit einer Messvorrichtung in unterschiedlichen Winkelstellungen des Messers erfolgen. Die Erfindung umfasst jedoch auch Ausführungsformen, bei welchen einem Messer mehrere Messvorrichtungen zugeordnet sind, die zum Beispiel zeitgleich mehrere Winkelbereiche des Messers erfassen können.

Schließlich ist Gegenstand der Erfindung auch ein Verfahren mit dem Merkmalen des Anspruchs 10 zum Besäumen und/oder Querteilen von Bändern, Blechen oder dergleichen mit einer Besäumvorrichtung, Querteilschere oder dergleichen Schneidvorrichtung, wobei der Schneidspalt vor, während und/oder nach dem Besäumen bzw. Querteilen mit einem Verfahren der beschriebenen Art bestimmt wird. Das erfindungsgemäße Messverfahren wird folglich vorzugsweise in einen Fertigungs- bzw. Bearbeitungsprozess integriert, so dass im Zuge des Besäumens oder auch Querteilens zu gegebener Zeit eine Bestimmung des Schneidspaltes erfolgen kann.

Der Schneidspalt beträgt optimal ca. 5% der Banddicke bei weichen Werkstoffen bis ca. 20% der Wanddicke bei harten Werkstoffen. Bei dünnen Bändern mit einer Dicke von zum Beispiel 0,1 mm bzw. 100 µm beträgt der optimale Schneidspalt folglich ca. 5 bis 20 µm, je nach Werkstoff. Im Rahmen der Erfindung wird zuverlässig gewährleistet, dass der optimale Schneidspalt mit hoher Genauigkeit eingestellt werden kann.

Im Folgenden wird die Erfindung anhand von lediglich ein Ausführungsbeispiel darstellenden Zeichnungen näher erläutert. Es zeigen:
- Fig. 1: eine erfindungsgemäße Besäumvorrichtung in einer teilgeschnittenen Ansicht,
- Fig. 2: eine weitere Darstellung des Gegenstandes nach Fig. 1,
- Fig. 3: eine Ansicht aus Richtung des Pfeils A auf die Messer des Gegenstandes nach Fig. 1 und
- Fig. 4: eine Messvorrichtung des Gegenstandes nach Fig. 1.

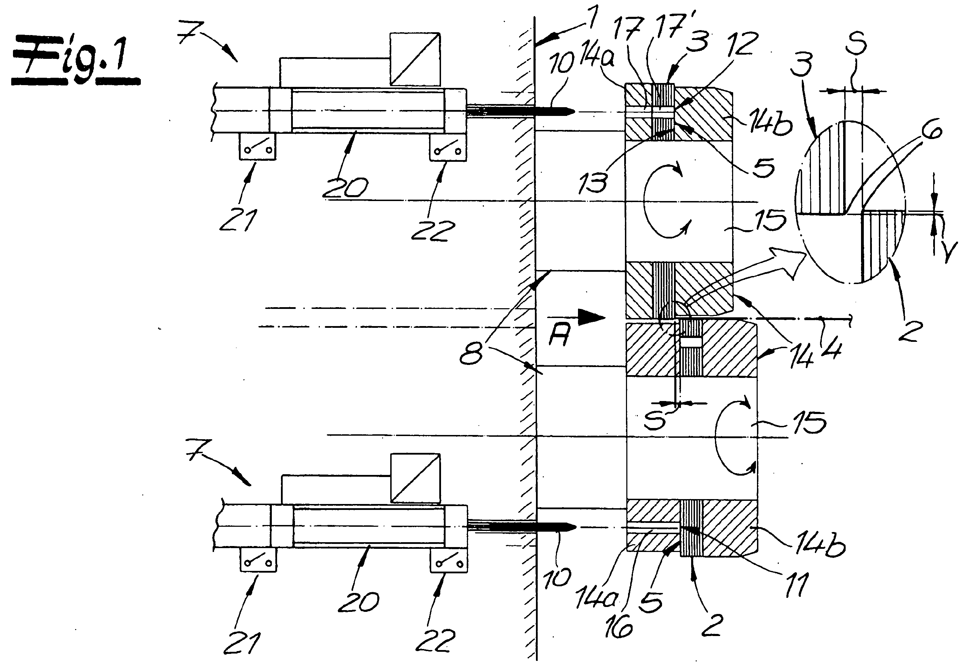

In den Figuren ist eine Vorrichtung zum Besäumen von Metallbändern mit einer Schneidvorrichtung 1 dargestellt, welche als Besäumkopf 1 ausgebildet ist und ein erstes Messer 2 als Untermesser und ein zweites Messer 3 als Obermesser aufweist. Das zu besäumende Metallband 4 ist lediglich angedeutet. Obermesser 3 und Untermesser 2 sind entlang der Blechebene und folglich im Ausführungsbeispiel in horizontaler Richtung um ein den Schneidspalt S bildendes Maß voneinander beabstandet. Die die Schneidflächen bildenden Stirnflächen 5 des jeweiligen Messers sowie die entsprechenden Schneidkanten 6 sind ebenfalls angedeutet. Im Übrigen ist insbesondere in Fig. 1 erkennbar, dass die beiden Messer 2, 3 mit vertikaler Überdeckung V zueinander angeordnet sein können. Das Maß dieser vertikalen Überdeckung, welches positiv oder auch negativ sein kann, ist im Rahmen der Erfindung jedoch von untergeordneter Bedeutung. Erfindungsgemäß ist nun vorgesehen, dass zur Bestimmung des Schneidspaltes S sowohl dem ersten Messer 2 als auch dem zweiten Messer 3 jeweils zumindest eine separate Positionsmessvorrichtung 7 zugeordnet sind. Im Rahmen der Erfindung kann folglich eine Messung sowohl der Position des ersten Messers 2 als auch der Position des zweiten Messers 3 erfolgen und aus diesen Messwerten lässt sich durch Differenzbildung der Schneidspalt S bestimmen.

Dabei ist in den Figuren angedeutet, dass jedem der Messer 2, 3 ein eigener Drehantrieb 8 zugeordnet ist, welcher das betreffende Messer rotierend antreibt. Ferner lässt sich die axiale bzw. horizontale Position der beiden Messer oder auch lediglich eines Messers mittels jeweils eines Stelltriebes 9 einstellen. Dieser ist in den Figuren lediglich angedeutet. Durch geeignete Positionierung lässt sich der gewünschte Schneidspalt S einstellen. Dabei besteht die Möglichkeit, dass entweder beide Messer 2, 3 separat einstellbar sind. Die Erfindung umfasst jedoch Ausführungsformen, bei welchen ein Messer in axialer Richtung fest positioniert ist und lediglich dass andere Messer in axialer Richtung positioniert wird. Auch bei einer solchen Ausführungsform ist es jedoch zweckmäßig sowohl bei der dem verfahrbaren als auch dem nicht verfahrbaren Messer eine separate Messvorrichtung 7 vorzusehen, um den Schneidspalt S in der erfindungsgemäßen Weise exakt zu bestimmen.

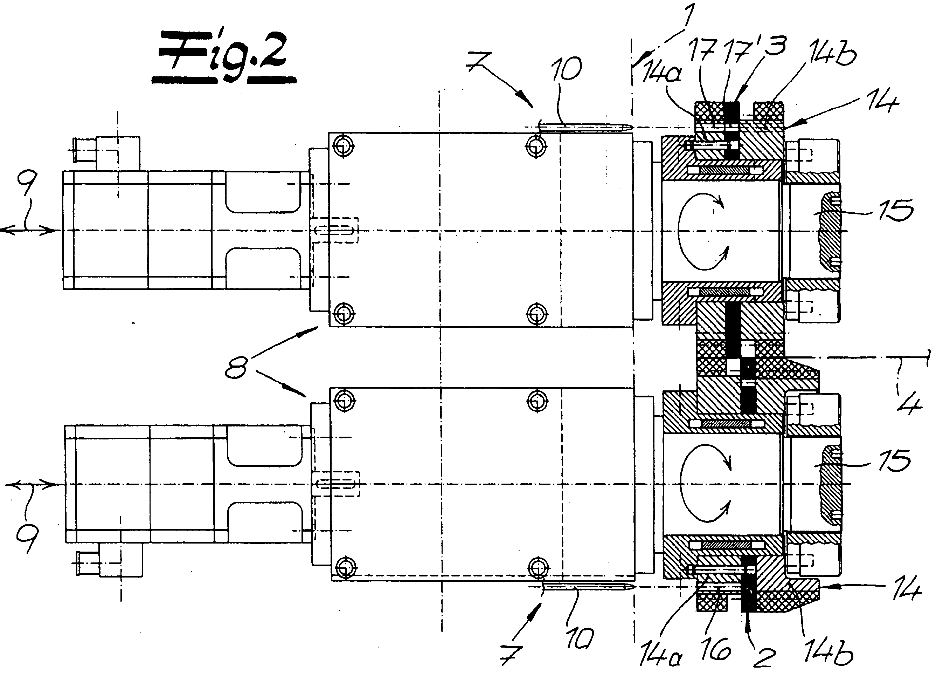

Die beiden Positionsmessvorrichtungen 7 sind gemäß Fig. 1 ortsfest an dem Besäumkopf 1 angeordnet, das heißt sie rotieren nicht mit den Messern 2, 3. Die Positionsmessvorrichtungen 7 sind dabei im Ausführungsbeispiel als berührend messende Messvorrichtungen 7, nämlich als Messtaster mit Taststiften 10 ausgebildet. Erfindungsgemäß arbeitet jede dieser Messvorrichtungen 7 auf eine Messfläche 11, 12, welche die Position des Messers 2, 3 in axialer Richtung wiedergibt. Bei der Messfläche 11 kann es sich, zum Beispiel bei dem Untermesser 2, um die Stirnfläche 5 des Messers 2 selbst handeln. Bei dem Obermesser 3 dient nicht die Stirnfläche 5 des Messers 3 selbst, sondern eine der betreffenden Stirnfläche 5 zugeordnete Anlagefläche 13 eines Messerhalters 14 als Messfläche 12. Dieses ermöglicht es, die beiden Messvorrichtungen 7 - wie in den Fig. 1 und 2 angedeutet - auf derselben Seite der Messer 2, 3 anzuordnen, nämlich auf der Antriebsseite und folglich auf der dem Metallband 4 abgewandten Seite der Messer 2, 3.

Jedes der Messer 2, 3 wird in an sich bekannter Weise von einem rotierend angetriebenen Messerhalter 14 gehalten, wobei ein solcher Messerhalter 14 im Ausführungsbeispiel jeweils zwei Haltebacken 14a, 14b aufweist, welche beidseitig des jeweiligen Messers 2, 3 angeordnet sind, so dass das Messer 2, 3 gleichsam zwischen den beiden Haltebacken 14a, 14b gehalten wird. Im Übrigen ist bei der Ausführungsform nach Fig. 1 erkennbar, dass diese beiden Haltebacken 14a, 14b und auch das dazwischen angeordnete Messer 2, 3 auf eine gemeinsame Messerwelle 15 aufgesetzt und auf dieser fixiert sind.

Erfindungsgemäß ist nun bei der Ausführungsform nach Fig. 1 und 2 bei dem einen Messer (Untermesser 2) lediglich in der einen Haltebacke 14a des Messerhalters 14 eine Messausnehmung 16 angeordnet, welche die Haltebacke 14a als Durchbrechung bzw. Loch vollständig durchdringt und demnach auf die betreffende Stirnfläche 5 des Untermessers 2 trifft. Durch diese Messausnehmung 16 lässt sich der Messstift 10 im Zuge der Messung direkt auf die Stirnfläche 5 des Untermessers 2 und folglich auf die Messfläche 11 aufsetzen. Es handelt sich folglich um die dem Messstift 10 zugewandte Haltebacke 14a der Messerhalterung 14.

Um in ähnlicher Weise eine Positionsmessung des Obermessers 3 zu gewährleisten, ist dort nicht nur eine Messausnehmung 17 im Bereich der jeweiligen Haltebacke 14a vorgesehen, sondern darüber hinaus auch eine mit dieser Messausnehmung 17 fluchtende Messausnehmung 17' in dem Messer 3 selbst. Auf diese Weise dringt der Messstift 10 durch die fluchtenden Messausnehmungen 17, 17' ein und kontaktiert als Messfläche 12 die der Stirnfläche 5 des Messers 3 zugeordnete Anlageflächen 13 der Messerhalterung 14 und zwar der zweiten Haltebacke 14b.

Da das Obermesser 3 mit seiner maßgeblichen Stirnfläche 5 fest auf diese Anlagefläche 13 aufliegt, kann diese Anlagefläche 13 als gleichsam Referenzfläche bzw. Messfläche 12 dienen.

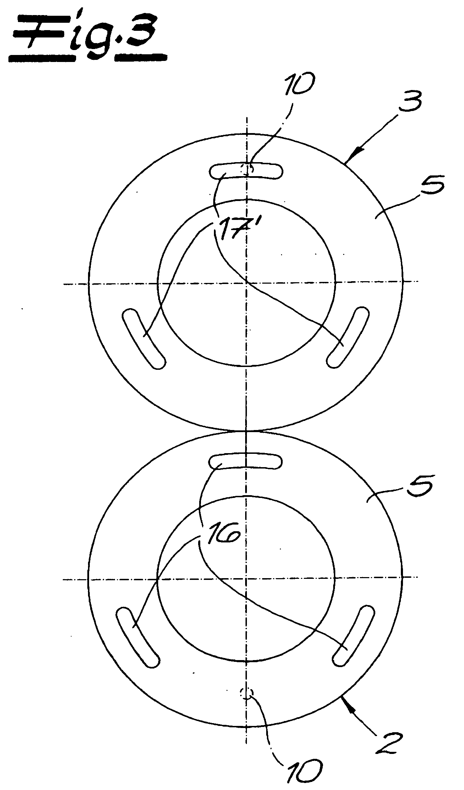

Insbesondere Fig. 3 zeigt, dass im Bereich von Obermesser 3 und Untermesser 2 nicht nur jeweils eine einzige Messausnehmung vorgesehen ist, sondern dass jeweils drei Messausnehmungen 16, 17, 17' vorgesehen sind, und zwar in unterschiedlichen Winkelbereichen. Auf diese Weise lässt sich die Messerposition in verschiedenen Winkelstellungen des Messers bestimmen, so dass eventuelle Planheitsfehler der Messerstirnflächen 5 ausgemittelt werden können.

Dabei ist es zweckmäßig, bei der dargestellten Ausführungsform die Positionsmessung bei ruhenden Messern durchzuführen, da die Messvorrichtungen, nämlich die Messtaster 10, nicht rotierend und folglich ortsfest am Besäumkopf 1 angeordnet sind, während die Messer 2, 3 mit ihren Messerhaltern 14 während des Betriebes rotieren. Es empfiehlt sich folglich zur Bestimmung des Schneidspaltes S die Messer 2, 3 in der gewünschten Weise bzw. in der gewünschten Winkelstellung zu positionieren, so dass dann der Messtaster 10 in die vorgesehenen Ausnehmungen einfahren kann.

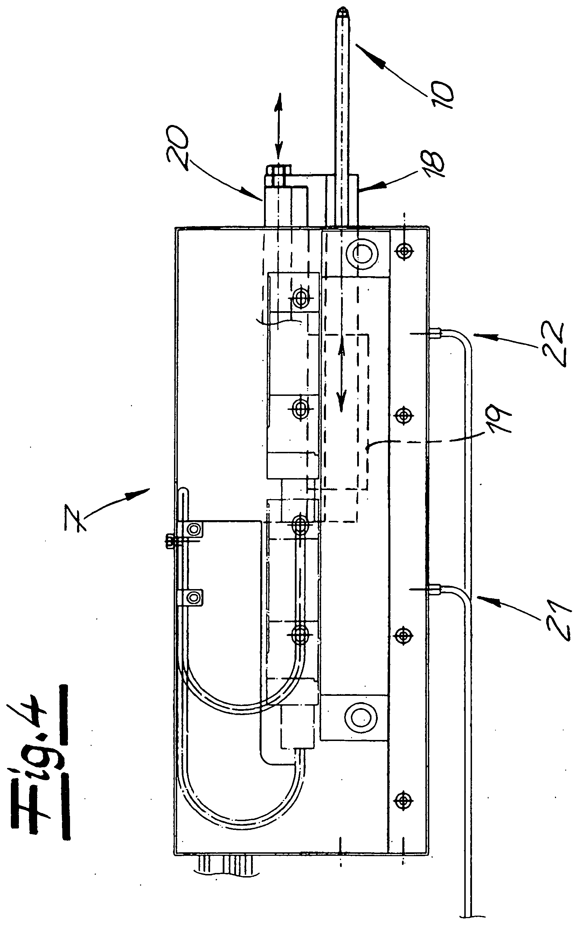

Die Fig. 4 verdeutlicht beispielhaft Aufbau und Funktionsweise der erfindungsgemäßen Messvorrichtungen 7 bzw. Messtaster 10. Die Messtaster 10 sind an einem Schlitten 18 in einer Linearführung 19 verfahrbar, und zwar mittels eines Messantriebes 20, der im Ausführungsbeispiel als pneumatische Zylinderkolbenanordnungen ausgebildet ist. Die Positionsbestimmung erfolgt über zwei lediglich angedeutete Näherungsschalter 21, 22.

Erfindungsgemäß kann der Schneidspalt nicht nur ermittelt werden, sondern es erfolgt üblicherweise unter Berücksichtigung der Messung eine exakte Einstellung eines Sollwertes.

Das Ausführungsbeispiel beschreibt die Erfindung lediglich für den Fall des Besäumens von Bändern oder Blechen. Die Erfindung umfasst jedoch auch andere Trennvorrichtungen bzw. Trennverfahren, zum Beispiel das Querteilen von Bändern mittels einer Querteilschere. In einem solchen Fall kann der Schneidspalt ebenfalls an mehreren Stellen eines Messers bestimmt werden, und zwar über die Länge des Messers, wobei Länge des Messers die Länge quer zur Bandlaufrichtung bzw. Blechlaufrichtung meint.

## Patentansprüche

1. Vorrichtung zum Schneiden bzw. Trennen von Bändern, Blechen oder dergleichen, insbesondere Metallbändern, -blechen oder dergleichen,
mit einer Schneidvorrichtung (1) die zumindest ein erstes Messer (2) und zumindest ein zweites Messer (3) aufweist, welche um ein den Schneidspalt (S) bildendes Maß voneinander beabstandet sind,
wobei zur Bestimmung des Schneidspaltes (S) sowohl dem ersten Messer (2) als auch dem zweiten Messer (3) jeweils zumindest eine Positionsmessvorrichtung (7) zugeordnet sind,
wobei die Positionsmessvorrichtung (7) als berührend und/oder als berührungslos messende Vorrichtung ausgebildet ist, welche direkt auf eine Messfläche (11, 12) arbeitet, die von der Stirnfläche (5) eines Messers (2, 3) und/oder einer der Stirnfläche (5) zugeordneten Anlagefläche (13) eines Messerhalters gebildet wird, **dadurch gekennzeichnet, dass**
der Messerhalter (14) und/oder das Messer (2, 3) zumindest eine Messausnehmung (16, 17, 17') aufweist, welche auf die jeweilige Messfläche (11, 12) trifft und dass
die Positionsmessvorrichtung (7) durch die Messausnehmungen (16, 17, 17') hindurch gegen die Messfläche (11, 12) arbeitet.

2. Vorrichtung nach Anspruch 1, **dadurch gekennzeichnet, dass** die Schneidvorrichtung (1) als Besäumschere mit zumindest zwei rotierenden Kreismessern (2, 3) ausgebildet ist.

3. Vorrichtung nach Anspruch 1, **dadurch gekennzeichnet, dass** die Schneidvorrichtung (1) als Querteilschere mit zumindest zwei schneidenden geraden Messern ausgebildet ist.

4. Vorrichtung nach einem der Ansprüche 1 bis 3, **dadurch gekennzeichnet, dass** die Positionsmessvorrichtung (7) als Messstift, Messtaster und/oder als Laser ausgebildet ist.

5. Vorrichtung nach einem der Ansprüche 1 bis 4, **dadurch gekennzeichnet, dass** der Messerhalter (14) beidseitig des Messers (2, 3) jeweils zumindest eine Haltebacke (14a, 14b) aufweist, wobei zumindest eine Haltebacke (14a, 14b) zumindest eine die Haltebacke (14a, 14b) vollständig durchdringende Messausnehmung (16, 17) aufweist, welche auf die jeweilige Messfläche (11, 12) trifft.

6. Vorrichtung nach Anspruch 5, **dadurch gekennzeichnet, dass** das Messer (3) eine das Messer (3) vollständig durchdringende Messausnehmung (17') aufweist, welche vorzugsweise mit einer Messausnehmung (17) der Haltebacken (14a, 14b) fluchtet.

7. Vorrichtung nach einem der Ansprüche 1 bis 6, **dadurch gekennzeichnet, dass** der Messerhalter (14) bzw. dessen Haltebacke (14a, 14b) und/oder das Messer (2, 3) mehrere über die Stirnfläche bzw. den Umfang verteilte Messausnehmungen, zum Beispiel drei bis fünf Messausnehmungen aufweisen.

8. Vorrichtung nach einem der Ansprüche 1 bis 7, **dadurch gekennzeichnet, dass** die Messvorrichtung (7) einen verfahrbaren Messstift (10) bzw. -taster aufweist, welcher die Messausnehmung (16, 17, 17') im Zuge der Messung durchdringt und gegen die Messfläche (11, 12) anliegt.

9. Vorrichtung nach Anspruch 8, **dadurch gekennzeichnet, dass** der Messstift bzw. -taster an einem verfahrbaren Schlitten mittels zumindest eines Antriebes, zum Beispiel einem Pneumatikzylinder, verfahrbar ist.

10. Verfahren zur Bestimmung und/oder Kalibrierung des Schneidspaltes einer Schneidvorrichtung für Bänder, Bleche oder dergleichen, insbesondere im Zuge des Besäumens und/oder Querteilens von Metallbändern oder -blechen, mit einer Vorrichtung nach einem der Ansprüche 1 bis 9,
wobei die Schneidvorrichtung ein erstes Messer und ein zweites Messer aufweist, welche um ein den Schneidspalt bildendes Maß voneinander beabstandet sind, **dadurch gekennzeichnet, dass** sowohl die Position des ersten Messers als auch die Position des zweiten Messers gemessen und aus diesen Positionen durch Differenzbildung der Schneidspalt bestimmt wird.

11. Verfahren nach Anspruch 10, **dadurch gekennzeichnet, dass** die Position des ersten und/oder zweiten Messers berührend, zum Beispiel mittels eines Messtasters oder Messstiftes, und/oder berührungslos, zum Beispiel mittels eines Lasers gemessen werden.

12. Verfahren nach Anspruch 10 oder 11, **dadurch gekennzeichnet, dass** die Messung der Position des ersten und/oder zweiten Messers bei ruhendem Messer erfolgt.

13. Verfahren nach einem der Ansprüche 10 bis 12, **dadurch gekennzeichnet, dass** die Position des ersten und/oder zweiten Messers mehrfach hintereinander, zum Beispiel für unterschiedliche Messerpositionen bzw. Winkelstallungen, gemessen wird.

14. Verfahren nach einem der Ansprüche 10 bis 13, **dadurch gekennzeichnet, dass** der Schneidspalt in Abhängigkeit von der Messung auf einen Sollwert eingestellt bzw. kalibriert oder geregelt wird.

15. Verfahren nach einem der Ansprüche 10 bis 14, **dadurch gekennzeichnet, dass** die Position des ersten und/oder zweiten Messers durch Messung durch eine oder mehrere Ausnehmungen in dem Messer und/oder einem Messerhalter direkt gegen die Stirnfläche eines Messers und/oder gegen eine der Stirnfläche zugeordnete Anlagenfläche eines Messerhalters erfolgt.

16. Verfahren zum Besäumen und/oder Querteilen von Bändern oder Blechen mit einer Besäumschere, Querteilschere oder dergleichen Schneidvorrichtung, **dadurch gekennzeichnet, dass** der Schneidspalt, vor, während und/oder nach dem Besäumen bzw. Querteilen mit einem Verfahren nach einem der Ansprüche 10 bis 15 bestimmt und gegebenenfalls auf einen Sollwert eingestellt bzw. kalibriert oder geregelt wird.

## Claims

1. A device for cutting or separating strips, sheets or the like, particularly metal strips, metal sheets or the like,
with a cutting device (1) that features at least one first blade (2) and at least one second blade (3) that are spaced apart from one another by a blade clearance (S),
wherein at least one position measuring device (7) is respectively assigned to the first blade (2) and to the second blade (3) in order to determine the blade clearance (S), and
wherein the position measuring device (7) is realized in the form of a contacting and/or contactless measuring device that acts directly upon a measuring surface (11, 12) formed by a face (5) of a blade (2, 3) and/or a contact surface (13) of a blade holder assigned to the face (5), **characterized in that**
the blade holder (14) and/or the blade (2, 3) features at least one measuring recess (16, 17, 17') that is directed at the respective measuring surface (11, 12), and **in that**
the position measuring device (7) acts upon the measuring surface (11, 12) through the measuring recesses (16, 17, 17').

2. The device according to claim 1, **characterized in that** the cutting device (1) is realized in the form of edge trimming shears with at least two rotating circular blades (2, 3).

3. The device according to claim 1, **characterized in that** the cutting device (1) is realized in the form of cut-to-length shears with at least two straight cutting blades.

4. The device according to one of claims 1-3, **characterized in that** the position measuring device (7) is realized in the form of a measuring pin or a measuring probe and/or in the form of a laser.

5. The device according to one of claims 1-4, **characterized in that** the blade holder (14) respectively features at least one holding jaw (14a, 14b) to both sides of the blade (2, 3), wherein at least one holding jaw (14a, 14b) features at least one measuring recess (16, 17) that extends through the entire holding jaw (14a, 14b) and is directed at the respective measuring surface (11, 12).

6. The device according to claim 5, **characterized in that** the blade (3) features a measuring recess (17') that extends through the entire blade (3) and is preferably aligned with a measuring recess (17) of the holding jaws (14a, 14b).

7. The device according to one of claims 1-6, **characterized in that** the blade holder (14) or its holding jaw (14a, 14b) and/or the blade (2, 3) features several measuring recesses, for example three to five measuring recesses, that are respectively distributed over the face or the circumference.

8. The device according to one of claims 1-7, **characterized in that** the measuring device (7) features a displaceable measuring pin (10) or measuring probe that penetrates the measuring recess (16, 17, 17') and contacts the measuring surface (11, 12) during the course of the measurement.

9. The device according to claim 8, **characterized in that** the measuring pin or measuring probe can be displaced on a displaceable slide by means of at least one drive such as, for example, a pneumatic cylinder.

10. A method for determining and/or calibrating the blade clearance of a cutting device for strips, sheets or the like, particularly during the course of edge trimming and/or cutting to length metal strips or metal sheets with a device according to one of claims 1-9,
wherein the cutting device features a first blade and a second blade that are spaced apart from one another by a blade clearance, **characterized in that** the position of the first blade and the position of the second blade are measured and the blade clearance is determined from these positions by means of subtraction.

11. The method according to claim 10, **characterized in that** the position of the first and/or second blade is measured in a contacting fashion, for example by means of a measuring probe or measuring pin, or in a contactless fashion, for example by means of a laser.

12. The method according to claim 10 or 11, **characterized in that** the position of the first and/or second blade is measured while the blades are stationary.

13. The method according to one of claims 10-12, **characterized in that** the position of the first and/or second blade is measured several times in succession, for example, for different blade positions or angular positions.

14. The method according to one of claims 10-13, **characterized in that** the blade clearance is adjusted or calibrated or set to a nominal value in dependence on the measurement.

15. The method according to one of claims 10-14, **characterized in that** the position of the first and/or second blade is measured by the measuring device directly acting upon the face of a blade and/or upon a contact surface of a blade holder assigned to the face through one or more recesses in the blade and/or a blade holder.

16. A method for edge trimming and/or cutting to length strips or sheets with edge trimming shears, cut-to-length shears or a similar cutting device, **characterized in that** the blade clearance is determined by means of a method according to one of claims 10-15 before, during and/or after the edge trimming or cutting-to-length operation and, if so required, adjusted or calibrated or set to a nominal value.

## Revendications

1. Dispositif de coupe ou de séparation de bandes, tôles ou similaires, en particulier de bandes ou tôles métalliques ou similaires,
comportant un dispositif de coupe (1) qui présente au moins une première lame (2) et au moins une seconde lame (3) qui sont espacées l'une de l'autre d'une distance formant l'intervalle de coupe (S),
dans lequel, pour définir l'intervalle de coupe (S), respectivement au moins un dispositif de mesure de position (7) est affecté aussi bien à la première dame (2) qu'à la seconde lame (3),
le dispositif de mesure de position (7) étant réalisé sous forme d'un dispositif mesurant avec contact et/ou sans contact qui fonctionne directement sur une surface de mesure (11, 12) qui est constituée par la surface frontale (5) d'une lame (2, 3) et/ou une surface d'appui (13) associée à la surface frontale (5) d'un porte-lame, **caractérisé en ce que** le porte-lame (14) et/ou la lame (2, 3) présente au moins une échancrure de mesure (16, 17, 17') qui arrive sur la surface de mesure respective (11, 12) et que
le dispositif de mesure de position (7) fonctionne à travers les échancrures de mesure (16, 17, 17') vers la surface de mesure (11, 12).

2. Dispositif selon la revendication 1, **caractérisé en ce que** le dispositif de coupe (1) se présente sous forme d'une cisaille de rives comportant au moins deux lames circulaires rotatives (2, 3).

3. Dispositif selon la revendication 1, **caractérisé en ce que** le dispositif de coupe (1) se présente sous forme d'une cisaille à diviser comportant au moins deux lames coupantes droites.

4. Dispositif selon une des revendications 1 à 3, **caractérisé en ce que** le dispositif de mesure de position (7) se présente sous forme d'une tige de mesure, d'une sonde de mesure et/ou d'un laser.

5. Dispositif selon une des revendications 1 à 4, **caractérisé en ce que** le porte-lame (14) présente des deux côtés de la lame (2, 3) respectivement au moins une mâchoire de retenue (14a, 14b), au moins une mâchoire de retenue (14a, 14b) présentant au moins l'échancrure de mesure de mesure (14a, 14b) traversant entièrement la mâchoire de retenue (16, 17) et arrivant sur la surface de mesure respective (11, 12).

6. Dispositif selon la revendication 5, **caractérisé en ce que** la lame (3) présente une échancrure de mesure (17') traversant entièrement la lame (3) et qui est de préférence alignée avec une échancrure de mesure (17) des mâchoires de retenue (14a, 14b).

7. Dispositif selon une des revendications 1 à 6, **caractérisé en ce que** le porte-lame (14) ou sa mâchoire de retenue (14a, 14b) et/ou la lame (2, 3) présentent plusieurs échancrures de mesure réparties sur la surface avant ou la circonférence, par exemple trois à cinq échancrures de mesure.

8. Dispositif selon une des revendications 1 à 7, **caractérisé en ce que** le dispositif de mesure (7) présente une tige ou sonde de mesure déplaçable (10) qui traverse l'échancrure de mesure (16, 17, 17') au cours de la mesure et est en contact avec la surface de mesure (11,12).

9. Dispositif selon la revendication 8, **caractérisé en ce que** la tige ou sonde de mesure est déplaçable sur un chariot mobile au moyen d'au moins une propulsion, par exemple un vérin pneumatique.

10. Procédé de définition et/ou d'étalonnage de l'intervalle de coupe d'un dispositif de coupe pour bandes, tôles ou similaires, en particulier au cours du cisaillage de rives et/ou du cisaillage transversal de bandes ou tôles métalliques à l'aide d'un dispositif selon une des revendications 1 à 9,
le dispositif de coupe présentant au moins une première lame et au moins une seconde lame qui sont espacées l'une de l'autre d'une distance formant l'intervalle de coupe, **caractérisé en ce qu'**aussi bien la position de la première lame que la position de la seconde lame sont mesurées et que, à partir de ces positions, l'intervalle de coupe est défini par calcul de la différence.

11. Procédé selon la revendication 10, **caractérisé en ce que** la position de la première et/ou seconde lame est mesurée avec contact, par exemple au moyen d'une sonde de mesure ou d'une tige de mesure, et/ou sans contact, par exemple au moyen d'un laser.

12. Procédé selon la revendication 10 ou 11, **caractérisé en ce que** la mesure de la position de la première et/ou seconde lame a lieu lorsque la lame est au repos.

13. Procédé selon une des revendications 10 à 12, **caractérisé en ce que** la position de la première et/ou seconde lame est mesurée plusieurs fois successivement, par exemple pour différentes positions de la lame ou positions angulaires.

14. Procédé selon une des revendications 10 à 13, **caractérisé en ce que** l'intervalle de coupe est paramétré ou éventuellement étalonné à une valeur théorique ou réglé en fonction de la mesure.

15. Procédé selon une des revendications 10 à 14, **caractérisé en ce que** la position de la première et/ou seconde lame est mesurée par mesure à travers une ou plusieurs échancrures dans la lame et/ou dans un porte-lame directement contre la surface avant d'une lame et/ou contre une surface de contact associée à la surface avant d'un porte-lame.

16. Procédé de cisaillage de rives et/ou de cisaillage transversal de bandes ou de tôles au moyen d'une cisaille de rives, d'une cisaille à diviser ou d'un dispositif de coupe similaire, **caractérisé en ce que** l'intervalle de coupe est défini avant, pendant et/ou après le cisaillage de rives ou le cisaillage transversal par un procédé selon une des revendications 10 à 15 et est le cas échéant paramétré ou éventuellement étalonné à une valeur théorique ou réglé.
